# EUROPEAN PATENT APPLICATION

(11) **EP 4 060 442 A1**
(43) Date of publication of application: **21.09.2022**
(21) Application number: 22162220.2
(22) Date of filing: 15.03.2022
(51) Int. Cl.: G05B 23/02, G05B 19/406

(54) **DIAGNOSTIC APPARATUS, SYSTEM, DIAGNOSTIC METHOD, AND CARRIER MEANS**

(30) Priority: 17.03.2021 JP 2021043916
(71) Applicant: Ricoh Company, Ltd., Tokyo 143-8555 (JP)
(72) Inventor: HANDA, Masato, Tokyo, 143-8555 (JP)
(74) Representative: SSM Sandmair

(57) **Abstract**

A diagnostic apparatus includes an acquisition unit (101a) to acquire a detection result of a time-varying physical quantity generated by a machine (200) that performs a plurality of processes; a determining unit (104) to generate a determination result of the processing based on the detection result; and an output unit (101b) to output, to the machine (200), batch determination information in units of a plurality of same type processes performed by the machine. The batch determination information indicates whether at least one of the plurality of same type processes is determined as abnormal. Based on the batch determination information, the machine performs an action.

## Description

### BACKGROUND

### Technical Field

The present disclosure relates to a diagnostic apparatus, a system, a diagnostic method, and carrier means.

### Related Art

Japanese Patent No. 6426667 discloses an abnormality detector that detects an abnormality of a tool of a machine tool. The abnormality detector includes an acquisition unit to acquire a plurality of measurement values related to the tool as measurement data, a normal model unit, an abnormality diagnostic unit, and a re-diagnostic unit. The normal model unit generates a normal model, by machine learning, based on one class classification, of measurement data acquired during machining in a normal state. The abnormality diagnostic unit determines whether measurement data is normal or abnormal based on the normal model while acquiring the measurement data during processing after the normal model is generated. The re-diagnostic unit re-diagnoses the measurement data determined as abnormal by the abnormality diagnostic unit, by a method different from the method of the abnormality diagnostic unit.

In a case where abnormality detection result is transmitted to the machine tool in a unit of one machining process and the machine tool performs an action based on each abnormality detection result, the machining cycle time increases, in particular, when one cycle includes a plurality of machining processes.

### SUMMARY

An embodiment provides a diagnostic apparatus that include an acquisition unit to acquire a detection result of a time-varying physical quantity generated by a machine that performs a plurality of processes including a plurality of same type processes; a determining unit to generate a determination result of the processing based on the detection result; and an output unit to output, to the machine, batch determination information in units of the plurality of same type processes performed by the machine. The batch determination information indicates whether at least one of the plurality of same type processes is determined as abnormal. Based on the batch determination information, the machine performs an action.

Another embodiment provides a system that includes the machine; and the diagnostic apparatus described above.

Another embodiment provides a diagnostic method that includes acquiring a detection result of a time-varying physical quantity generated by a machine that performs a plurality of processes including a plurality of same type processes; generating a determination result of the processing based on the detection result; and outputting, to the machine, batch determination information in units of the plurality of same type processes performed by the machine. The batch determination information indicates whether at least one of the plurality of same type processes is determined as abnormal. Based on the batch determination information, the machine performs an action.

Another embodiment provides carrier means carrying computer readable code for controlling a computer to perform the method described above.

Accordingly, the determination information of processing is output in units of a plurality of processes, thereby reducing the standby time for the machine to perform an action based on the determination result.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of a configuration of a diagnostic system according to one embodiment of the present disclosure;
FIG. 2 is a block diagram illustrating an example of a hardware configuration of a machine of diagnostic system illustrated in FIG. 1;
FIG. 3 is an external view of an example of the machine illustrated in FIG. 2;
FIG. 4 is a diagram illustrating a machining process to be diagnosed by the diagnostic system according to one embodiment;
FIGS. 5A and 5B are diagrams illustrating a process of associating, with a detection result, a machining process to be diagnosed by the diagnostic system according to one embodiment;
FIG. 6 is a block diagram illustrating an example of a hardware configuration of a diagnostic apparatus according to one embodiment;
FIG. 7 is a block diagram illustrating an example of a hardware configuration of a diagnostic apparatus of diagnostic system illustrated in FIG. 1;
FIG. 8 is a flowchart illustrating a diagnostic process according to one embodiment;
FIG. 9 is a timing chart illustrating a diagnostic process according to one embodiment;
FIG. 10 is a flowchart illustrating a process performed by the diagnostic apparatus according to one embodiment, based on batch determination;
FIG. 11 is a flowchart illustrating a sequence of operation performed by the machine according to one embodiment, based on a batch determination macro variable;
FIG. 12A is a timing chart illustrating a diagnostic process according to one embodiment, based on batch determination; and
FIG. 12B is a timing chart illustrating a diagnostic process according to a comparative example, based on individual determination.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Descriptions are given below in detail of a diagnostic apparatus, a diagnostic, a diagnosis program, and a diagnostic system according to embodiments, with reference to the accompanying drawings.

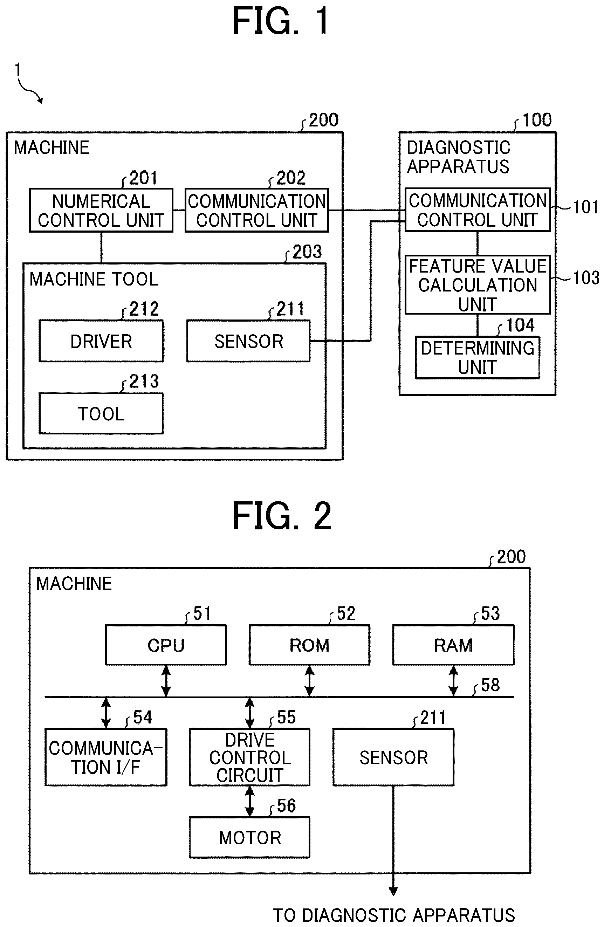

FIG. 1 is a block diagram illustrating an example of a configuration of the diagnostic system according to the present embodiment. As illustrated in FIG. 1, a diagnostic system 1 includes a diagnostic apparatus 100 and a machine 200. The machine 200 is an example of an apparatus to be diagnosed by the diagnostic apparatus 100.

The machine 200 and the diagnostic apparatus 100 may be connected in any connection form. For example, the machine 200 and the diagnostic apparatus 100 are connected by a dedicated connection line, a wired network such as a wired local area network (LAN), or a wireless network.

The machine 200 includes a numerical control unit 201, a communication control unit 202, and a machine tool 203. The machine tool 203 includes a sensor 211, a driver 212, and a tool 213.

The machine tool 203 is a machine that processes a workpiece (subject to be machined) under the control of the numerical control unit 201. The machine tool 203 includes the driver 212 that operates under the control of the numerical control unit 201. The driver 212 is a motor, for example. The tool 213 is a part that is driven by the driver 212. The tool 213 may be any tool, such as a drill and an end mill, which performs machining on a workpiece and is subjected to numerical control. The machine tool 203 may include two or more drivers 212.

In the present embodiment, the machine tool 203 and the machine 200 including the machine tool 203 are subjected to diagnosis. However, the technical idea of the present disclosure is not limited to diagnosis of a machine tool and an apparatus including the machine tool. That is, the apparatus to be diagnosed may be any machine such as an assembly machine, a measurement machine, an inspection machine, or a cleaning machine.

The numerical control unit 201 performs numerical control of the machining by the machine tool 203. For example, the numerical control unit 201 generates and outputs numerical control data for controlling the operation of the driver 212. The numerical control unit 201 outputs operation information to the communication control unit 202. The operation information is information determined for each type of action of the machine tool 203. The operation information is also referred to as context information. The operation information includes, for example, information identifying the tool 213 driven by the driver 212 (e.g., information such as tool type, tool manufacturer, and tool diameter), the spindle rotation speed of the driver 212 during machining, the rotation speed and feed speed of the driver 212 during machining, movement information (spindle coordinate values) of the driver 212 and the tool 213 during machining, and the current value of the spindle of the driver 212 during machining.

The numerical control unit 201 transmits, for example, operation information of the current operation of the tool 223 to the diagnostic apparatus 100 via the communication control unit 202. In machining on the workpiece to be machined, the numerical control unit 201 changes the type of the tool 213 driven by the driver 212 or the drive state (rotation number, rotation speed, etc.) of the driver 212 in accordance with the machining process. When the type of operation of the tool 233 is changed, the numerical control unit 201 sequentially transmits operation information corresponding to the changed type of operation to the diagnostic apparatus 100 via the communication control unit 202.

The communication control unit 202 controls communication with an external device such as the diagnostic apparatus 100. For example, the communication control unit 202 transmits operation information corresponding to the current operation of the tool 223 to the diagnostic apparatus 100.

The sensor 211 detects a physical quantity that changes according to the operation of the machine 200 and outputs a detection result (sensor data). The type of the sensor 211 and the type of the physical quantity to be detected are not limited. For example, the sensor 211 detects a physical quantity and outputs the detected physical quantity information as a detection result (sensor data) to the diagnostic apparatus 10. The physical quantity detected is vibration, sound, or the like generated when the tool (such as a drill, end mill, cutting tool tip, or grindstone) installed in the machine tool 203 contacts the workpiece to be machined during the processing, or vibration, sound, or the like generated by the tool or the machine 70 itself.

For example, the sensor 211 is a microphone, a vibration sensor, an accelerometer, or an acoustic emission (AE) sensor, and outputs acoustic data, vibration data, acceleration data, or data indicating an AE wave as a detection result. The sensor 211 is installed adjacent to the tool 213 or adjacent to a motor of the machine tool 203, so as to detect vibration, sound, or the like. Note any number of sensors 211 may be used. The plurality of sensors 211 may be of the same type to detect the same physical quantity, or of different types to detect different physical quantities.

For example, when a blade of the tool 213 used for machining is broken or chipped, the sound during machining changes. Accordingly, an abnormality of the machine tool 203 is determined by acquiring acoustic data using the sensor 211 (microphone) and comparing the acoustic data with a model indicating a normal sound.

The diagnostic apparatus 100 includes a communication control unit 101, a feature value calculation unit 103, and a determining unit 104. The communication control unit 101 controls communication with an external device such as the machine 200. For example, the communication control unit 101 receives the operation information and the detection result from the machine 200. The communication control unit 101 transmits (outputs) a signal (batch determination macro variable described later) corresponding to the determination by the determining unit 104 to the communication control unit 202 of the machine 200.

The feature value calculation unit 103 calculates a feature value used in determination by the determining unit 104 from the operation information and the detection result. In the present embodiment, information including at least the operation information and the detection result is referred to as "operation-related information."

The determining unit 104 determines an abnormality degree of the machine tool 203 based on the feature value calculated from the operation-related information. The determining unit 104 generates a signal for the machine tool 203 based on the determination.

Specific functions of the feature value calculation unit 103 and the determining unit 104 will be described in detail later.

FIG. 2 is a block diagram illustrating an example of the hardware configuration of the machine 200. As illustrated in FIG. 2, the machine 200 includes a central processing unit (CPU) 51, a read only memory (ROM) 52, a random access memory (RAM) 53, a communication interface (I/F) 54, a drive control circuit 55, and a motor 56, which are connected to one another via a bus 58.

The CPU 51 controls the entire operation of the machine 200. The CPU 51 executes a program stored in the ROM 52 or the like using, for example, the RAM 53 as a work area, to control the entire operation of the machine 200 and implement machining functions.

The communication I/F 54 is an interface for communicating with an external apparatus such as the diagnostic apparatus 100. The drive control circuit 55 is a circuit that controls the drive of the motor 56. The motor 56 drives the tool 213 such as a drill, a cutter, a table, and the like, used for machining. The motor 56 corresponds to, for example, the driver 212 in FIG. 1. The sensor 211 is attached to the machine 200. The sensor 211 detects a physical quantity that changes in accordance with the action of the machine 200, and outputs a detection result to the diagnostic apparatus 100.

The numerical control unit 201 and the communication control unit 202 illustrated in FIG. 1 may be implemented by the CPU 51 (in FIG. 2) executing a program, that is, by software. Alternatively, the numerical control unit 201 and the communication control unit 202 may be implemented by hardware such as an integrated circuit (IC), or may be implemented by a combination of software and hardware.

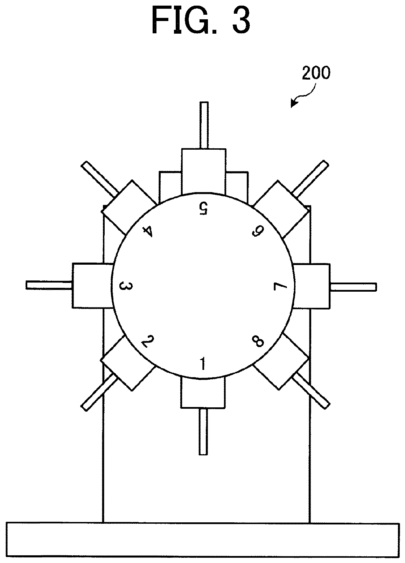

FIG. 3 is an external view of an example of the machine 200. As illustrated in FIG. 3, the machine 200 generally includes a plurality of holders (in FIG. 3, eight holders 1 to 8) and has a capability to hold a plurality of different tools. Any tool can be attached to any of the holders. There are various types of tools. For example, there are a 5-mm diameter drill, a 10-mm diameter drill, a 5-mm diameter end mill, and a 5-mm diameter reamer. Therefore, cutting is performed with a plurality of tools and different machining parameters in one machining cycle.

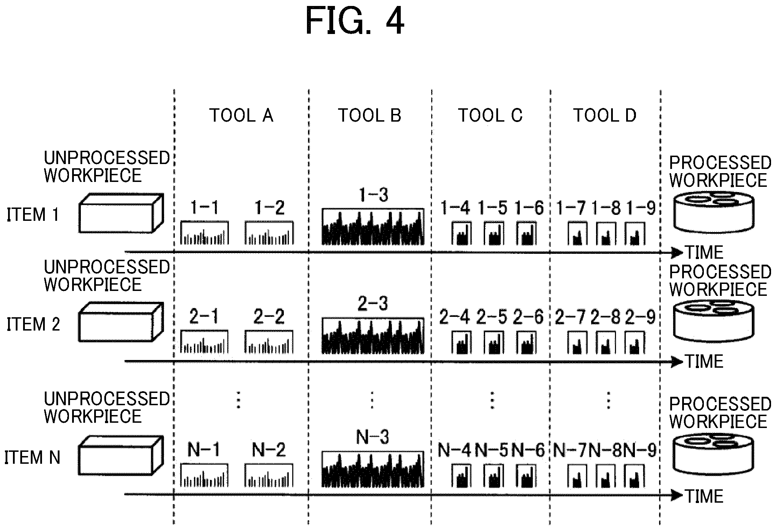

FIG. 4 is a diagram illustrating machining cycles including a plurality of machining processes to be diagnosed by the diagnostic system according to one embodiment. In the example of FIG. 4, an item 1 (unprocessed workpiece) is subjected to processes 1-1 and 1-2 by a tool A, a process 1-3 by a tool B, processes 1-4 to 1-6 by a tool C, and processes 1-7 to 1-9 by a tool D. Similarly, on items 2 to N, processes 2-1 and 2-2 (N-1 and N2) by the tool A, a process 2-3 (N-3) by the tool B, processes 2-4 to 2-6 (N-4 to N-6) by the tool C, and processes 2-7to 2-9 (N-7 to N-9) by the tool D are performed. The tools A to D are examples of the tool 213. When an unmachined workpiece is machined according to a machining program, the diagnostic apparatus 100 acquires the operation information from the numerical control unit 201 via the communication control unit 202. When the tool type is focused as the operation information, the machine tool 203 performs machining by the tool A a plurality of times and then the tool A is switched to another tool. In the example as illustrated in FIG. 4, the processes 1-1 and 1-2 of process items 1 to N are regarded as the same type of machining.

When a machining programs is performed a plurality of times on different workpieces, the processes 1-1, 2-1, and N-1 in which similar machining is performed are regarded as the same type of machining. In this way, the same type of machining is associated with processes in the same machining program or with a plurality of workpieces. Whether the machining is the same type is determined based on, in addition to the type of the tool 213, machining information such as the number of times of machining, a machining cycle, a machining program, spindle rotation speed, and a sequence number. The diagnostic apparatus 100 acquires the machining information from the machine 200. The above-mentioned operation-related information may include the machining information in addition to the operation information and the detection result.

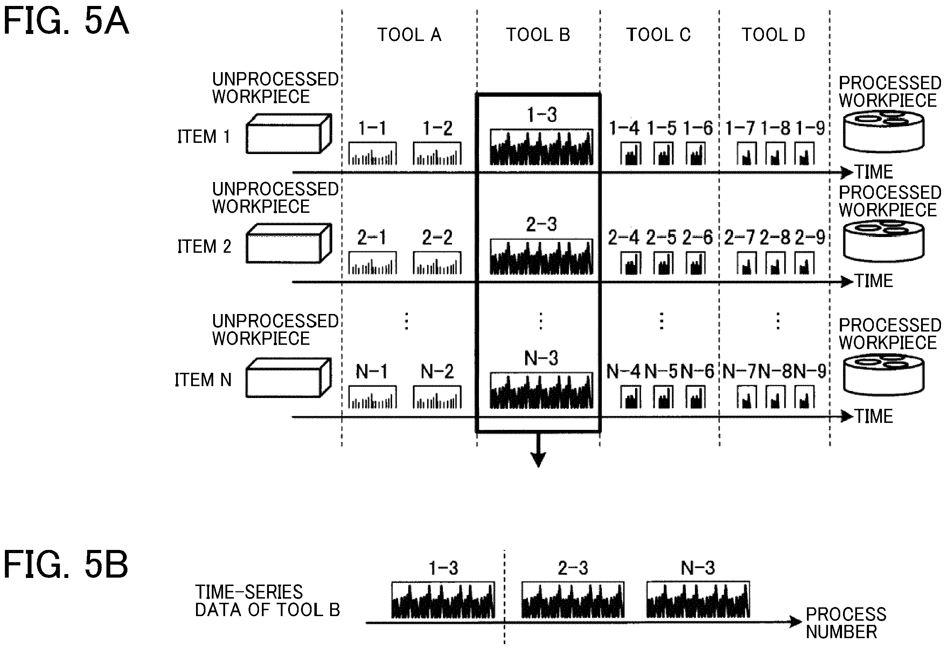

FIGS. 5A and 5B are diagrams illustrating a process of associating machining information with a detection result. In some cases, one machining program includes a plurality of processes of the same machining information, and in other cases, the same machining program is executed a plurality of times. In such a case, in order to observe a change in the feature value of a particular machining process, preferably, the processes of the same machining information are grouped. In the present embodiment, detection results corresponding to the same machining information are associated with each other and grouped, to calculate a feature value. In the example of FIG. 5A, the process 1-3 by the tool B on the item 1, the process 2-3 by the tool B on the item 2, and the process N-3 by the tool B on the item N are grouped as a time-series data of the tool B, as illustrated in FIG. 5B.

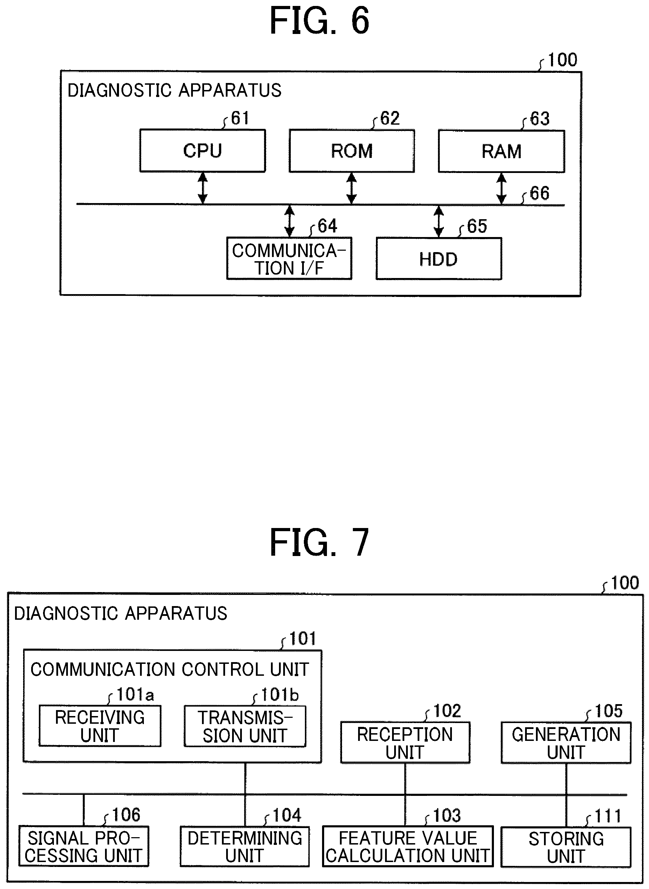

FIG. 6 is a block diagram illustrating an example of the hardware configuration of the diagnostic apparatus 100. As illustrated in FIG. 6, the diagnostic apparatus 100 includes a CPU 61, a ROM 62, a RAM 63, a communication I/F 64, and a hard disk drive (HDD) 65, which are connected via a bus 66.

The CPU 61 controls the entire operation of the diagnostic apparatus 100. The CPU 61 executes a program stored in the ROM 62 or the like using, for example, the RAM 63 as a work area, to control the entire operation of the diagnostic apparatus 100 and implement various diagnostic functions. The communication I/F 64 is an interface for communicating with an external apparatus such as the machine 200. The HDD 65 stores information such as setting information of the diagnostic apparatus 100, operation information and machining information transmitted by the numerical control unit 201 of the machine 200 and received via the communication control unit 202, and detection results transmitted from the sensor 211. The diagnostic apparatus 100 may include, instead or in addition to the HDD 65, a nonvolatile memory such as an electrically erasable programmable read-only memory (EEPROM) or a solid state drive (SSD).

FIG. 7 is a block diagram illustrating an example of the functional configuration of the diagnostic apparatus 100. As illustrated in FIG. 7, the diagnostic apparatus 100 includes a reception unit 102, a generation unit 105, a signal processing unit 106, and a storing unit 111, in addition to the communication control unit 101, the feature value calculation unit 103, and the determining unit 104 described above.

The communication control unit 101, the reception unit 102, the feature value calculation unit 103, the determining unit 104, and the generation unit 105 illustrated in FIG. 7 may be implemented by the CPU 61 illustrated in FIG. 6 executing a program, that is, by software. Alternatively, these units may be implemented by hardware such as an IC or by a combination of software and hardware. The reception unit 102 may be implemented by, for example, a keyboard, a mouse, a touch panel, or a voice input device.

The communication control unit 101 includes a receiving unit 101a and a transmission unit 101b. The receiving unit 101a is an example of an acquisition unit that acquires a detection result of a time-varying physical quantity generated when the machine 200 performs machining, and receives various types of information transmitted from an external device such as the machine 200. For example, the receiving unit 101a receives operation information corresponding to the current operation of the machine tool 203, machining information, and a detection result (corresponding to the current operation of the machine tool 203) transmitted from the sensor 211. The received operation information, the machining information, and the detection result are associated with each other and sent to the signal processing unit 106. The transmission unit 101b transmits various kinds of information to the external device. In particular, the transmission unit 101b transmits (outputs) control signals, generated in accordance with the abnormality degree by the determining unit 104, to the communication control unit 202 of the machine 200. The transmission unit 101b is an example of an output unit.

The signal processing unit 106 receives the operation information, the machining information, and the detection result associated with each other, and performs pre-processing.

The feature value calculation unit 103 receives the pre-processed operation information, the machining information, and the detection results (operation-related information). The feature value calculation unit 103 classifies the operation information and the detection results by the type of machining, and calculates a feature value (feature information) corresponding to the current operation of the machine tool 203. The feature value may be any information that indicates a feature of the detection result. For example, when the detection result is acoustic data collected by a microphone, the feature value calculation unit 103 may calculates a feature value such as energy, a frequency spectrum, or mel-frequency cepstrum coefficients (MFCC) of the detection result.

The determining unit 104 determines an abnormality degree of the machine tool 203 based on the feature value calculated from the operation-related information, and the diagnostic apparatus 100 causes the machine tool 203 to perform an action corresponding to the abnormality degree.

In other words, the determining unit 104 calculates the abnormality value corresponding to the current operation of the machine tool 203, using the feature value calculated by the feature value calculation unit 103. The abnormality value is a quantitative value calculated based on the feature value with respect to the tool 213 of the machine 200, the motor and the spindle of the driver 212, and the like. The abnormality value is calculated using, for example, threshold processing of the feature value, or machine learning using the feature value as an input. Examples of machine learning include support-vector machine (SVM) and neural network. Note that the method of calculating the abnormality value is not limited thereto, and any method for calculating the abnormality value from the feature value may be used. For example, the abnormality degree is not directly compared with a threshold value. Alternatively, the threshold value may be compared with a value indicating a variation of the abnormality degree, to indirectly calculate the abnormality degree.

The determining unit 104 sequentially determines the abnormality degree related to the machine tool 203 based on time-series information of the calculated abnormality value, and the machine tool 203 performs an action according to the determined abnormality degree. For example, when the determining unit 104 determines that the abnormality degree indicates a characteristic (change) that is significantly different from that of a similar machining, the machine tool 203 immediately stops the machining based on the abnormality degree.

The storing unit 111 stores various kinds of information used for a diagnosis function of the diagnostic apparatus 100, a program dedicated to execution of a diagnostic process described later, and the like. The storing unit 111 is implemented, for example, by the RAM 63 (in FIG. 6), the HDD 65 (in FIG. 6), or both. The storing unit 111 stores the operation information corresponding to the current operation of the machine tool 203, the machining information, detection results, and the abnormality degree calculated by the determining unit 104, in association with each other. In one embodiment, the storing unit 111 stores, as appropriate, at least one deep learning model used for calculating an abnormality value and calculating a feature value.

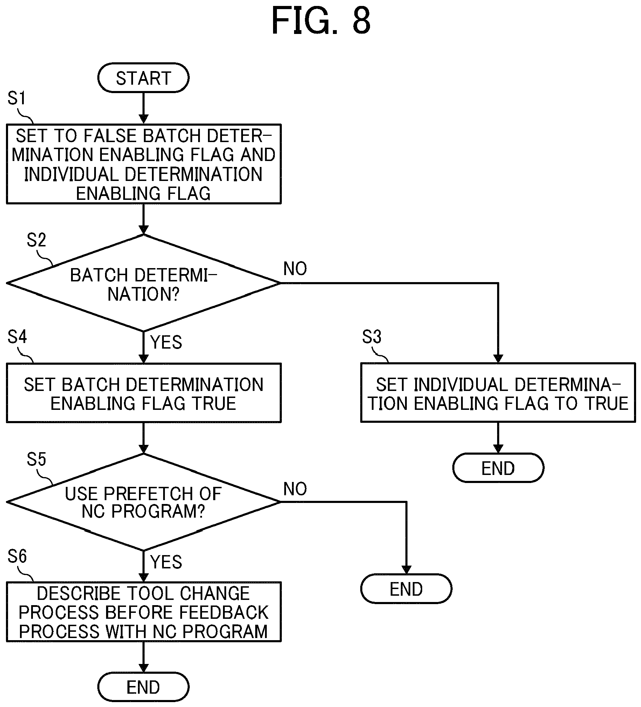

FIG. 8 is a flowchart illustrating a diagnostic process executed by the diagnostic apparatus according to the present embodiment.

The diagnostic apparatus 100 of the diagnostic system initializes (set to false) the values of a batch determination enabling flag and an individual determination enabling flag (step S1). False means invalid, and true means valid.

Next, the diagnostic apparatus 100 determines whether to perform the batch determination based on a user input to the reception unit 102 (step S2). In the case of the individual determination (No in S2), the diagnostic apparatus 100 sets the individual determination enabling flag to true (step S3), and the transmission unit 101b ends the process.

In the case of the batch determination (Yes in step S2), the diagnostic apparatus 100 sets the batch determination enabling flag to true (step S4).

In the individual determination, the diagnostic apparatus 100 transmits a determination result for each machining process (e.g., the process 1-1 in FIG. 4), and the machine 200 changes the action based on the determination result (hereinafter, this operation is referred to as "feedback processing") of each machining process. In the batch determination, the diagnostic apparatus 100 collectively transmits determination results of a series of machining processes, and the machine 200 performs feedback processing once.

In the individual determination, when an abnormality occurs, machining can be immediately stopped, but the cycle time is long. In the batch determination, when an abnormality occurs, machining is not immediately stopped, but the cycle time is short.

Following step S4, the diagnostic apparatus 100 determines whether to use prefetch function of a numerical control (NC) program based on a user input to the reception unit 102 (step S5). When the prefetch function is used, the diagnostic apparatus 100 describes the tool change processing before the feedback processing in the NC program (step S6), and ends the process.

An example of the prefetch function of the NC program is presented below. With the prefetch function, while a first code line is being executed, a second code line is executed.
M6T2 // change tool at spindle to tool B
M98P1000 // call feedback processing (subprogram)

For example, the user determines whether to use prefetch function in the batch determination, considering whether the machining cycle involves tool change and whether further reduction of cycle time is preferred.

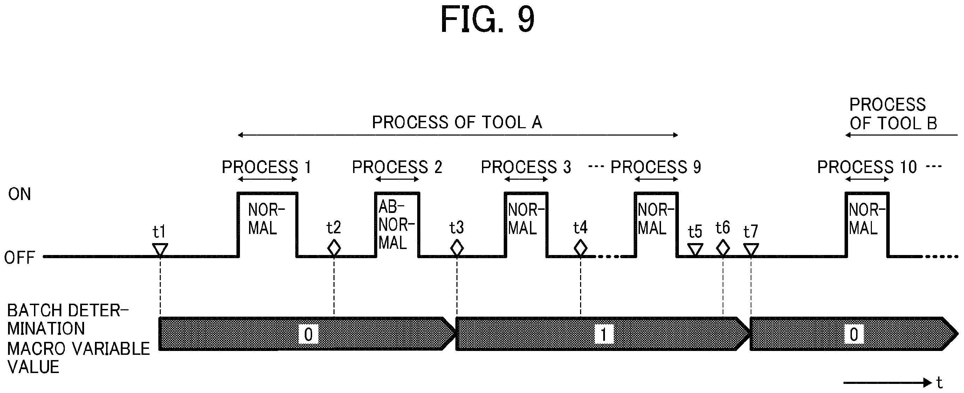

FIG. 9 is a timing chart illustrating the diagnostic process according to the present embodiment.

In FIG. 9, a batch of nine processes (processes 1 to 9) by the same tool A (one type of the tool 213) is collectively diagnosed, and a process 10 by the tool B is not included in the batch determination. In the drawing, ON indicates that machining is being performed by the tool, and OFF indicates that machining is not being performed by the tool.

When diagnostic apparatus 100 determines to perform the batch determination in the step S2 illustrated in FIG. 8, these processes are collectively diagnosed, and the machine 200 performs feedback of action. The determination results of the processes 1 to 9 are collectively stored in a macro variable that is hereinafter referred to as a batch determination macro variable. The batch determination macro variable is allocated from a macro variable region that can be handled by a user of computer numerical control (CNC). The value of the batch determination macro variable is binary. The batch determination macro variable is "1" when the determination results of the batch of processes include at least one abnormality, and "0" when all of the determination results indicate normal. The batch determination macro variable is an example of batch determination information based on the determination results by the determining unit 104. The batch determination information is output in units of a plurality of machining processes of same type, for the machine 200 to perform an action based on the determination results. An example of the plurality of machining processes of the same type is a plurality of processes performed by the same tool 213.

In FIG. 9, the machine 200 initializes the value of the batch determination macro variable to 0 immediately after the start of the NC program (t1). After completion of the process 1, the diagnostic apparatus 100 determines, with the determining unit 104, the machining state of the process 1 based on the detection result, and writes the determination result (0: normal) to the batch determination macro variable (t2).

Next, after the process 2 ends, the diagnostic apparatus 100 determines, with the determining unit 104, the machining state of the process 2 based on the detection result, and writes the determination result (1: abnormal) to the batch determination macro variable. The diagnostic apparatus 100 transmits, with the communication control unit 101, the batch determination macro variable to the machine 200 based on a fact that the value "1" (abnormal) is written to the batch determination macro variable (t3).

After the end of the process 3, the diagnostic apparatus 100 determines, with the determining unit 104, the machining state of the process 3 based on the detection result (t4). However, the determining unit 104 does not change the batch determination macro variable regardless of the determination result (0: normal) of the process 3.

The diagnostic apparatus 100 performs, with the determining unit 104, the same processing for the processes 4 to 9, and determines the machining state of the process 9, based on the detection result, after the process 9 ends (t6). However, determining unit 104 does not change the batch determination macro variable regardless of the determination result (0: normal) of the process 9.

The machine 200 has received the batch determination macro variable at the t3. Accordingly, the machine 200 changes the tool (t5) after the end of the process 9 and before the determination of machining state of the process 9 (t6). Then, the machine 200 performs feedback processing (t7).

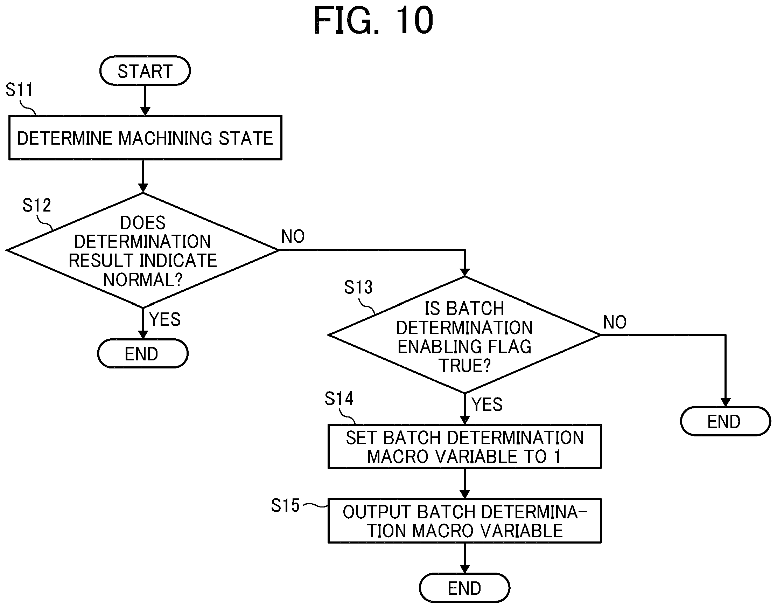

FIG. 10 is a flowchart illustrating a diagnostic process in batch determination according to the present embodiment.

The diagnostic apparatus 100 determines, with the determining unit 104, the machining state of the machining process based on the detection result (step S11). The diagnostic apparatus 100 confirms the determination result (step S12), and ends the process based on the determination result indicating normal.

When the determination result indicates abnormal, the diagnostic apparatus 100 checks the batch determination enabling flag illustrated in FIG. 8 (step S13). When the batch determination enabling flag is false (No in S13), the diagnostic apparatus 100 ends the process.

When the batch determination enabling flag is true (Yes in S13), the diagnostic apparatus 100 writes the value "1" indicating abnormal to the batch determination macro variable (step S14). The transmission unit 101b of the diagnostic apparatus 100 transmits the batch determination macro variable to the machine 200 (step S15).

The diagnostic apparatus 100 repeats the process illustrated in FIG. 10 for a plurality of processes of the same type. As a result, in the example illustrated in FIG. 9, the determination results of the processes 1 to 9 are stored as the value of the batch determination macro variable. That is, the transmission unit 101b collectively outputs the batch determination macro variable to the machine 200 based on the determination result determined by the determining unit 104 for each of the plurality of process.

The abnormality may be determined a plurality of times in step S12 during the processes 1 to 9. In such a case, in step 15, the batch determination macro variable may be transmitted to the machine 200 each time the abnormality is determined, or only the first determination of the abnormality.

In the present embodiment, the determination results are integrated into one macro variable by logical disjunction (OR) of the determination results. However, the variable processing is not limited thereto. Alternatively, macro variables to store the respective determination results of the processes may be provided. In this case, feedback processing is performed with reference to the value of each macro variable.

Further, in the present embodiment, the value of the batch determination macro variable is updated after each machining process, but variable values may be collectively written after the last machining process (the process 9 in the example of FIG. 9).

In the present embodiment, the diagnostic apparatus 100 transmits the batch determination macro variable to the machine 200 so that the machine 200 performs an action based on the determination result of the determining unit 104. The action to be performed is determined by the machine 200 based on the batch determination macro variable (and, for example, the operation-related information).

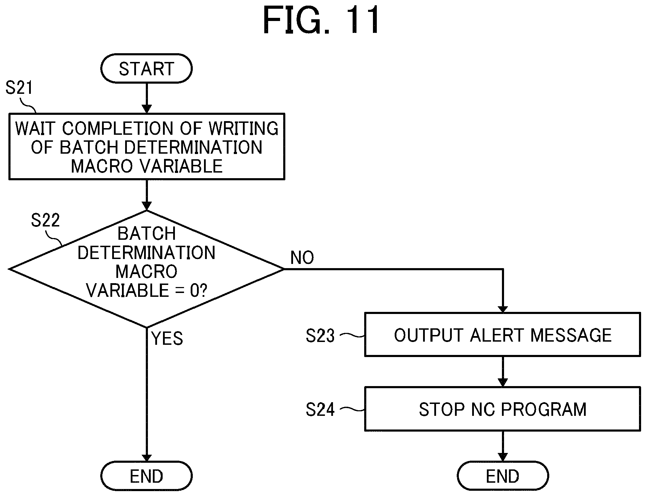

FIG. 11 is a flowchart illustrating a sequence of operations performed by the machine 200 based on the batch determination macro variable.

The machine 200 waits for completion of writing of the batch determination macro variable based on the reception status of the batch determination macro variable transmitted from the diagnostic apparatus 100 (step S21).

The machine 200 checks the value of the batch determination macro variable (step S22). When the value "1" of the batch determination macro variable is not received from the diagnostic apparatus 100, the batch determination macro variable is 0, that is, the variable indicates normal. Thus, the machine 200 ends the process.

On the other hand, when the value "1" of the batch determination macro variable is received from the diagnostic apparatus 100, the machine 200 outputs an alert message (step S23) and stops (ends) the NC program (step S24). When resuming the NC program, the machine 200 initializes the batch determination macro variable to 0.

The machine 200 may execute only one of the steps S23 and S24.

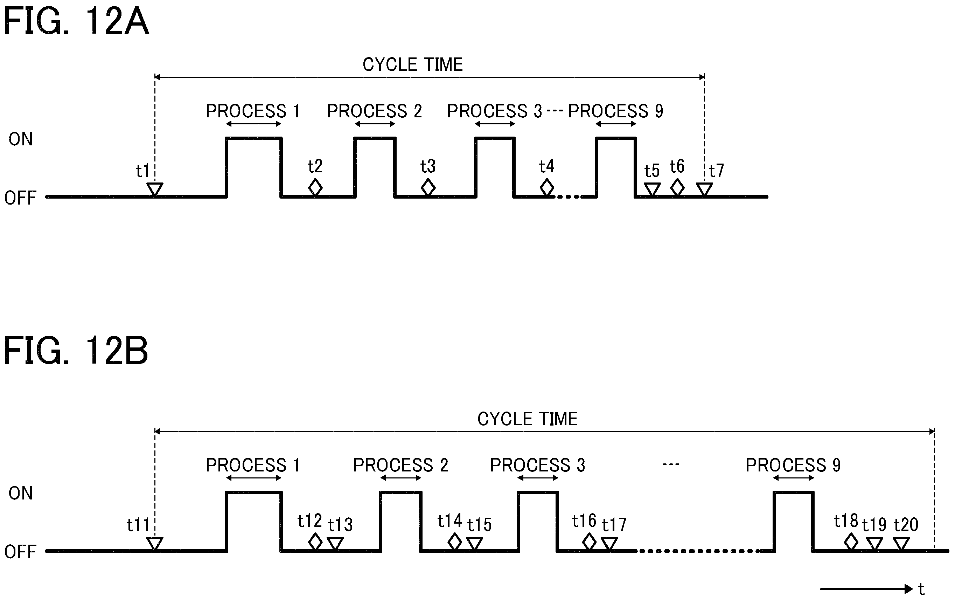

Referring to FIGS. 12A and 12B, descriptions are given below of the diagnosis process according to the present embodiment and that according a comparative example.

FIG. 12A is a timing chart illustrating the diagnostic process according to the present embodiment corresponding to the batch determination illustrated in FIG. 8. The timing chart in FIG. 12A is similar to the timing chart illustrated in FIG. 9.

FIG. 12B is a timing chart illustrating the diagnosis process according to the comparative example corresponding to the individual determination illustrated in FIG. 8.

In FIG. 12B, the machine 200 initializes the value of the individual determination macro variable to 0 immediately after the start of the NC program (t11). After the process 1 ends, the diagnostic apparatus 100 determines, with the determining unit 104, the machining state of the process 1 based on the detection result, and writes the determination result in the individual determination macro variable. The diagnostic apparatus 100 transmits, with communication control unit 101, the individual determination macro variable to the machine 200 (t12). The machine 200 performs feedback processing based on the individual determination macro variable (t13).

The diagnostic apparatus 100 performs a similar processing for the processes 2 to 9. After the process 9 ends, the diagnostic apparatus 100 determines, with the determining unit 104, the machining state of the process 9 based on the detection result, and writes the determination result in the individual determination macro variable. The diagnostic apparatus 100 transmits, with communication control unit 101, the individual determination macro variable to the machine 200 (t18). The machine 200 performs feedback processing (t19) based on the individual determination macro variable, and then changes the tool (t20). The individual determination macro variable is an example of individual determination information for the machine 200 to perform an action based on the determination result in a unit of one machining process of the plurality of machining processes.

Here, a cycle time is defined as the time from the macro variable initialization to either of the tool change completion or the feedback completion that occurs later. The cycle time of the diagnostic process in FIG. 12A (according to the present embodiment) is shorter than the cycle time of the comparative example illustrated in FIG. 12B. Thus, according to the present embodiment, the diagnostic apparatus 100 reduces the standby time for the machine 200 to perform an action based on the determination result of the machining state.

Specifically, in the comparative example, the feedback processing is performed each time the determination result is written to the individual determination macro variable after the machining process. Accordingly, the cycle time increases by "number of machining processes multiplied by feedback processing time."

On the other hand, in the present embodiment, the feedback processing is performed once. Further, the order of the feedback processing and the tool change is switched after the last machining process, and the feedback processing is prefetched to be executed during the tool change. This configuration reduces the increase in the cycle time to "feedback processing time minus tool change time."

As illustrated in step S2 of FIG. 8, based on whether the diagnostic apparatus 100 performs the batch determination or the individual determination, the transmission unit 101b outputs, to the machine 200, either the batch determination macro variable as illustrated in FIG. 12A or the individual determination macro variable as illustrated in FIG. 12B.

As described above, the diagnostic apparatus 100 according to an embodiment of the present disclosure includes the receiving unit 101a that is an example of an acquisition unit that acquires a detection result of a time-varying physical quantity generated when the machine 200 (an example of a machine performs processing), and the determining unit 104 that determines a state of the processing based on the detection result and causes the machine 200 to perform an operation based on a determination result of the determining unit 104, and the diagnostic apparatus 100 causes the machine 200 to perform an action based on the determination result by the determining unit 104. The diagnostic apparatus 100 further includes the transmission unit 101b that is an example of an output unit to output a batch determination macro variable. The batch determination macro variable is an example of instruction information according to which the machine 200 performs an action based on the determination result by the determining unit 104 in units of a plurality of machining processes of same type. Accordingly, the machine performs an action based on the determination result of the machining state with a reduced standby time.

The transmission unit 101b outputs the batch determination macro variable to the machine 200 based on the respective determination results, determined by the determining unit 104, of the plurality of machining processes.

The transmission unit 101b outputs, to the machine 200, either the batch determination macro variable or the individual determination macro variable (an example of individual determination information for the machine 200 to perform an action based on the determination result for each of a plurality of processes).

The machine 200 performs machining (processing) with the plurality of tools 213. The transmission unit 101b outputs, to the machine 200, the batch determination macro variable for the machine 200 to perform an action based on the determination result in units of a plurality of processes of the same tool 213.

A diagnostic method according to an embodiment of the present disclosure includes acquiring, with the receiving unit 101a, a detection result of a time-varying physical quantity generated when the machine 200 performs machining; determining, with a determining unit 104, the state of the machining based on the detection result; outputting, with the transmission unit 101b, a determination result (the batch determination macro variable) for the machine 200 to perform an action based on the determination result by the determining unit 104 in units of a plurality of machining processes of same type; and performing, with the machine 200, an action based on the determination result.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A diagnostic apparatus comprising:
an acquisition unit (101a) configured to acquire a detection result of a time-varying physical quantity generated by a machine (200) that performs a plurality of processes, the plurality of processes including a plurality of same type processes;
a determining unit (104) configured to generate a determination result of the processing based on the detection result; and
an output unit (101b) configured to output, to the machine (200), batch determination information in units of the plurality of same type processes performed by the machine, the batch determination information indicating whether at least one of the plurality of same type processes is determined as abnormal, the batch determination information based on which the machine performs an action.

2. The apparatus according to claim 1,
wherein the output unit (101b) outputs the batch determination information to the machine (200) based on the determination result for each of the plurality of same type processes.

3. The apparatus according to claim 1 or 2,
wherein the output unit (101b) performs either output of the batch determination information to the machine (200), or output of individual determination information to the machine (200), for each of a plurality of processes performed by the machine (200).

4. The apparatus according to any one of claims 1 to 3,
wherein the plurality of processes performed by the machine (200) includes a plurality of processes using different tools (213), and
wherein the plurality of same type processes is a plurality of processes using a same one of the different tools (213).

5. A system comprising:
the machine (200); and
the apparatus according to any one of claims 1 to 4.

6. A diagnostic method comprising:
acquiring a detection result of a time-varying physical quantity generated by a machine (200) that performs a plurality of processes including a plurality of same type processes;
generating (S11) a determination result of the processing based on the detection result; and
outputting (S15), to the machine, batch determination information in units of the plurality of same type processes performed by the machine, the batch determination information indicating whether at least one of the plurality of same type processes is determined as abnormal, the batch determination information based on which the machine performs an action.

7. Carrier means carrying computer readable code for controlling a computer to perform the method of claim 6.
